# EUROPEAN PATENT SPECIFICATION

(11) **EP 2 222 381 B1**
(45) Date of publication and mention of the grant of the patent: **30.10.2019**
(21) Application number: 08850493.1
(22) Date of filing: 16.11.2008
(51) Int. Cl.: B01D 17/04

(54) **IN-LINE SYSTEM FOR DE-SALTING FUEL OIL SUPPLIED TO GAS TURBINE ENGINES**
INLINE-SYSTEM ZUM ENTSALZEN VON GASTURBINENMOTOREN ZUGEFÜHRTEM BRENNÖL
SYSTÈME EN LIGNE DE DESSALEMENT DU CARBURANT SERVANT À ALIMENTER DES MOTEURS À TURBINE À GAZ

(30) Priority: 16.11.2007 US 996430 P
(43) Date of publication of application: 01.09.2010
(73) Proprietor: Triton Emission Solutions Inc., Boca Raton, FL 33432 (US)
(72) Inventor: NORLING, Rasmus, Miami, FL 33132 (US)
(74) Representative: Eisenführ Speiser
(86) International application number: PCT/US2008/083713
(87) International publication number: WO 2009/065095

(56) References cited:
- EP-A1- 0 188 119
- WO-A1-2006/003525
- FR-A1- 2 388 037
- GB-A- 705 267
- GB-A- 722 729
- US-A- 4 348 288
- US-A- 5 228 283
- US-B2- 6 814 481

## Description

This invention is concerned with a simple, low-cost system for de-salting fuel oil, particularly biodiesel, supplied to gas turbine engines, particularly marine gas turbine engines of the type used in propulsion systems for ships.
In response to rising costs and environmental concerns associated with traditional fossil fuels, fuel-dependent industries are turning to biodiesel to power gas turbine engines. Royal Caribbean Cruises Ltd. was among the first major corporations in the travel industry to recognize the potential benefits of using biodiesel, and is a pioneer in the implementation of a successful biodiesel program onboard its ships.
In the implementation of the biodiesel program, it became apparent that salinity found in biodiesel is a significant problem. Salinity reduces the lifespan of gas turbine engines. The normal lifespan of a gas turbine engine burning fuel with an optimal level of salinity of less than 0.1 ppm is 25,000 hours. When the salinity is increased to 0.2 ppm, the maximum concentration for commercial use, the lifespan is reduced by 50%, and at 0.7 ppm there is a 90% reduction in lifespan.

Early in the program of using biodiesel to power marine gas turbine engines, it was discovered that the salinity level of fuel intended for use was in the range of 5-11.5 ppm, which is unacceptable. Such high salinity content renders the fuel unsuitable for use by gas turbine engines.

While processes exist in the prior art for de-salting fuel oil, they are expensive and impractical for use in de-salting fuel to power marine gas turbine engines. Such engines burning 100% biodiesel (a 99.9% biodiesel, 0.1% palm oil blend mix) require an optimal level of salinity of less than 0.1 ppm. The present invention provides a biodiesel fuel having the required characteristics.

GB705267A and EP 0188119A discloses de-salting fuel oil in a fuel supply system of a gas turbine engine, comprising supplying salt-containing fuel oil to an in-line section of pipe of predetermined length in the fuel supply system; supplying water to the in-line section of pipe; creating a water-fuel oil emulsion in the in-line section of pipe, whereby the water extracts salt from the salt-containing fuel; and passing the emulsion from the in-line section of pipe to a separator in the fuel supply system that separates fuel oil from water in the emulsion.

The invention is in the method of Claim 1 and the apparatus of Claim 6. Brief Description of the Invention

The present invention provides a method and an apparatus for de-salting fuel oil, particularly fuel oil used to power marine gas turbine engines. The invention uses a section of pipe that is part of a piping system for supplying desalted fuel to a gas turbine. Salt-containing fuel oil and water are supplied to the section of pipe in such a manner that a water-fuel oil emulsion is created in the section of pipe and such that the water extracts salt from the salt-containing fuel. De-salted fuel and salt-containing water are passed to a separator, more particularly a centrifugal separator. The construction of the section of pipe is such that turbulent flow is created therein. The water is injected into the section of pipe as a fine spray, using a nozzle, more particularly a sprinkler head. The construction of the section of pipe is such that the salt-containing fuel oil is caused to swirl before it encounters the fine spray of water injected into the section of pipe. Mixing pins in the section of pipe promote turbulent flow in the emulsion passed from the section of pipe to the separator.

### Brief Description of the Drawings

The invention will be further described in conjunction with the accompanying drawings, which illustrate preferred (best mode) embodiments, and wherein:
Fig. 1 is a diagrammatic view of a fuel-supply system according to the invention;
Fig. 1A is a diagrammatic view showing an emulsifier of the invention and related components;
Fig. 2 is a diagrammatic view of a modified emulsifier of the invention;
Fig. 3 is a diagrammatic view of a propeller that causes the salt-containing fuel oil to swirl as it enters the emulsifier;
Fig. 4 is a view of an actual propeller used in the invention;
Fig. 5 is a view of an actual water nozzle used in the invention;
Fig. 6 is a view of actual mixing pins used in the invention;

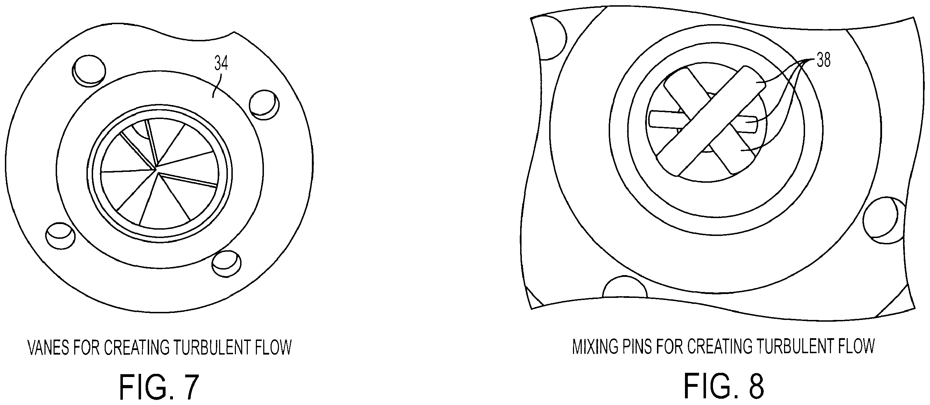

Fig. 7 is a view showing a modified propeller;
Fig. 8 is another view showing actual mixing pins; and
Fig. 9 is a view of another version of an emulsifier employed in the invention.

### Detailed Description of the Invention

The present invention is an in-line system using a simple static emulsifier to thoroughly mix salt-containing fuel oil (e.g., biodiesel) with water, thereby to draw the salt from the fuel into the water preferentially, and then separating the de-salted fuel from the salt-containing water. This process can be carried out repeatedly in a closed cycle until the desired salinity level is attained.

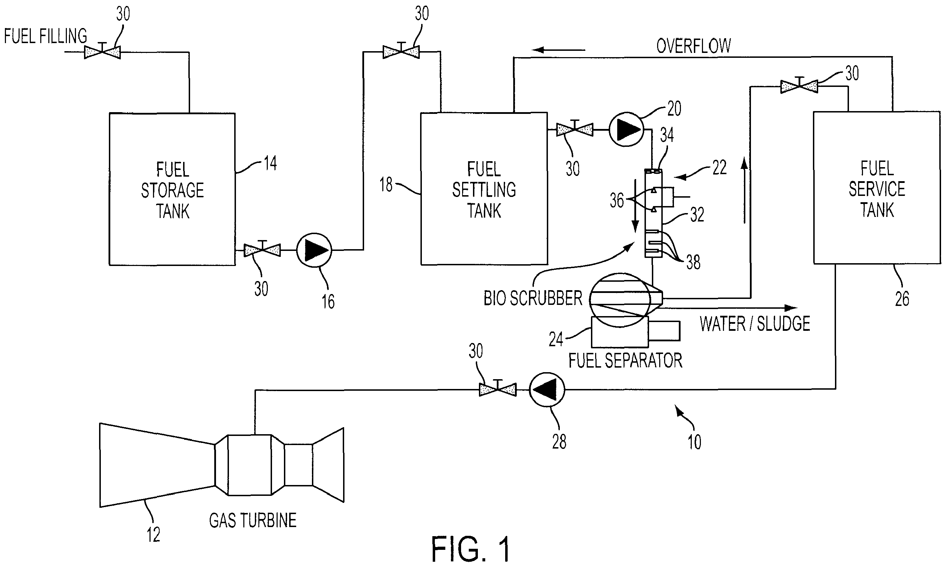

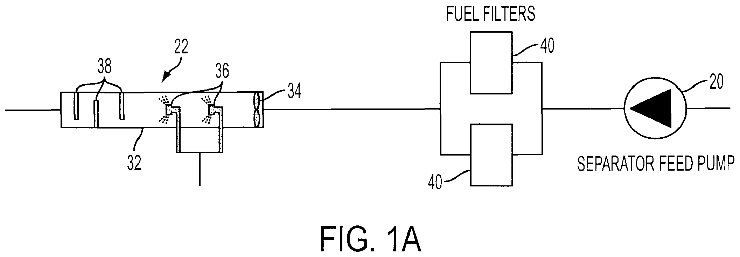

Fig. 1 shows, diagrammatically, a fuel-supply system 10 according to the invention, for supplying de-salted biodiesel to a gas turbine engine 12. Fuel is supplied to the fuel storage tank 14 from an on-shore fuel facility. The fuel is then pumped by a pump 16, based on consumption, to the fuel settling tank 18. From the fuel settling tank, fuel is pumped by a pump 20 through a static emulsifier 22 (bio scrubber), in which the fuel is thoroughly mixed with water, and then to a centrifugal fuel separator 24. The separator separates the emulsion into two components, namely, an at least partially de-salted fuel, and salt-containing water. The de-salted fuel is supplied to a fuel service tank 26, which overflows back to the fuel settling tank. Once the fuel has been de-salted to the required low salinity level, it can be pumped by a pump 28 to the gas turbine 12. A system of valves 30 shown in Fig. 1 is used to control fuel flow to the various sections of the system. Among other things, this permits repetitive cycling of partially de-salted fuel, through the emulsifier 22 and the separator 24, until the desired salinity level is achieved. The system can operate automatically, or valves 30 can be controlled manually. An ordinary salinity meter can be used to determine the salinity level. The level of fuel in the fuel service tank will depend upon the fuel consumption by the gas turbine.

An essential component of the invention is the static emulsifier 22, which, in the embodiment, is a section of pipe 32 (e.g., 4" diameter) into which fuel is directed by a three-blade "propeller" 34 made of bent flat steel. The propeller (which does not rotate) causes the incoming fuel to swirl as it enters the emulsifier.

Following the propeller are water-mist nozzles 36, oriented as shown, to which technical (distilled) water from a high pressure washing machine is supplied. The nozzles are sprinkler heads of a type used in fire-control systems aboard ships. The fire control nozzle is designed to give as fine a spray as possible (in order to put out a fire in a compartment). Following the sprinkler heads are a plurality (e.g., three) of mixing pins 38 oriented at different angles across the pipe of the emulsifier to assist in creating turbulent flow that is important to the process of the invention. Fig. IA shows the emulsifier 22 with the inlet propeller 34, two nozzles 36, and three mixing pins 38. In this figure, a separator feed pump 20 is shown supplying fuel to the emulsifier 22 through fuel filters 40.

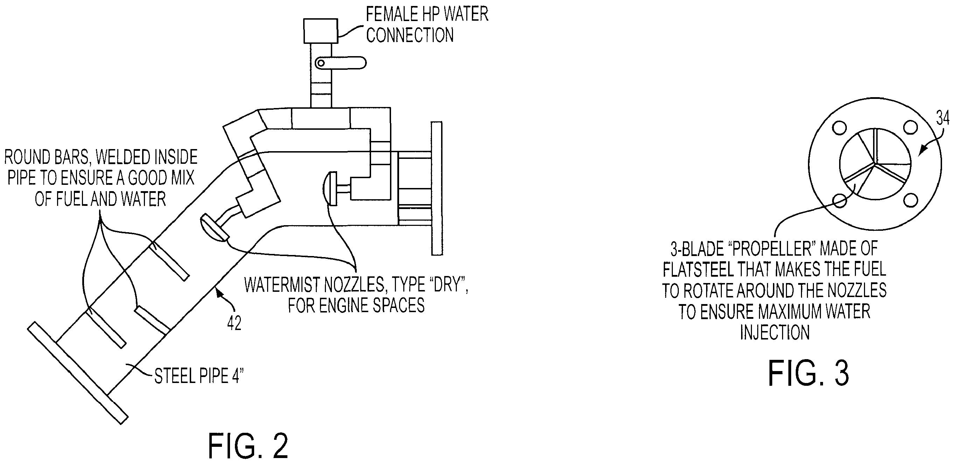

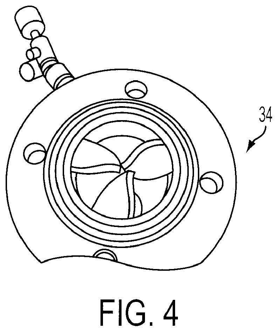

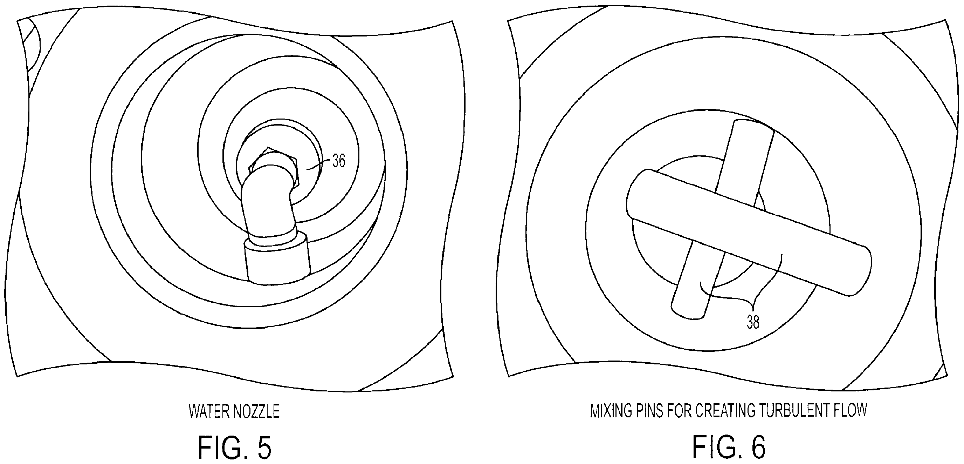

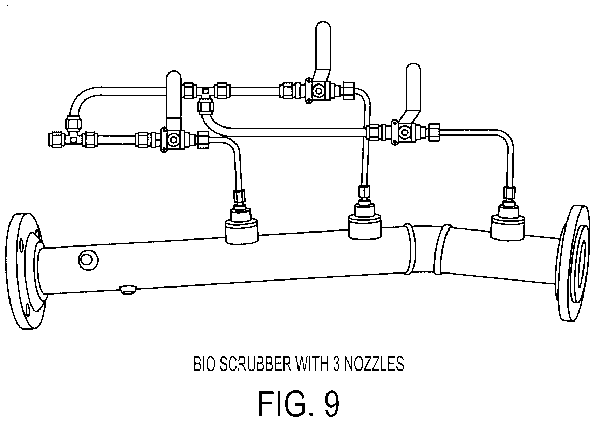

In the diagram of Fig. 1, the emulsifier 22 is shown as a straight section of pipe 32, but the pipe may be angulated as shown by pipe 42 in Fig. 2. The drawing of Fig. 3 shows the three-blade propeller, while Fig. 4 is an actual photograph of the propeller. Figs. 5 and 6 are actual photographs showing a water nozzle and mixing pins. Figs, 7 and 8 are actual photographs of vanes 34 for creating turbulent flow at the inlet of the emulsifier, and mixing pins for creating turbulent flow. Fig. 9 is an actual photograph of a modification 22 of the emulsifier using three sprinkler head nozzles 36.

In a working embodiment of the invention, water flow was at the rate of 2.4 liters per minute (3.7 m³ over 24 hours) at a water temperature of about 30° C. The temperature of the biodiesel fuel at the point where the water was injected was about 58° C. The use of two fine-spray nozzles together with the swirl-causing propeller and the mixing pins creates an emulsion required to remove salt (e.g., sodium and potassium chloride) from fuel oil supplied at a flow rate of 5m³/hr, for example.

## Claims

1. A method of de-salting fuel oil, in which salt-containing fuel oil and water are supplied to a section of a pipe in such a manner that a water-fuel oil emulsion is created in this section of said pipe in such that the water extracts salt from the salt-containing fuel, and the emulsion is passed to a separator (24) that separates de-salted fuel from salt-containing water in the emulsion, **characterised in that** the emulsion is formed in a static emulsifier (22) that comprises said section (32) of pipe between an inlet to which salt-containing fuel oil is supplied and an outlet from which the emulsion is passed to the separator and wherein the salt-containing fuel oil supplied to the inlet is caused to swirl upon entering the inlet, a fine spray of water is injected into the swirling salt-containing fuel oil, whereby the emulsion is formed and turbulent flow is promoted in the emulsion formed in said section of pipe.

2. A method according to claim 1, further **characterised in that** the swirl is created by a propeller which does not rotate.

3. A method according to claim 1, further **characterised in that** the turbulent flow is promoted by mixing pins (38) in the section of pipe.

4. A method according to claim 1, wherein the section (32) of pipe is an in-line section.

5. A method according to claim 4, wherein the de-salting method is performed repetitively before de-salted fuel oil is supplied to the gas turbine engine.

6. An apparatus (10) for de-salting fuel oil, in which a water-fuel oil emulsion is formed and adapted to be passed to a separator (24) that separates fuel oil from the water in the emulsion, **characterised in that** the apparatus includes a static emulsifier (22) that comprises a section (32) of pipe of predetermined length between an inlet thereof for receiving salt-containing fuel oil, and an outlet thereof from which the emulsion can be passed to the separator, the section of pipe having in sequence between the inlet and the outlet, a part for causing swirling of salt-containing fuel oil received by the inlet, a part for injecting a fine spray of water into swirling salt-containing fuel oil, and a part for promoting turbulent flow of emulsion passed from the section of pipe.

7. An apparatus according to claim 6, further **characterised in that** the swirling part is constituted by a static propeller (34).

8. An apparatus according to claim 6, further **characterised in that** the turbulent flow promoting part is constituted by a group of mixing pins (38) oriented at different angles across the section of pipe.

9. An apparatus according to claim 6, further **characterised in that** the water injecting part comprises at least one water-misting nozzle (36).

10. An apparatus according to claim 6, wherein the section of pipe and the separator are components of a piping system for supplying de-salted fuel to a gas turbine (12).

## Patentansprüche

1. Verfahren zum Entsalzen von Kraftstofföl, indem salzhaltiges Kraftstofföl und Wasser in einen Abschnitt eines Rohrs in so einer Weise zugeführt werden, dass eine Wasser-Kraftstofföl-Emulsion in diesem Abschnitt des Rohrs so erzeugt wird, dass das Wasser Salz aus dem salzhaltigen Kraftstoff extrahiert und die Emulsion an einen Abscheider (24) geleitet wird, der entsalzenen Kraftstoff vom salzhaltigen Wasser in der Emulsion trennt, **dadurch gekennzeichnet, dass** die Emulsion in einem statischen Emulgator (22) gebildet wird, der den Abschnitt (32) des Rohrs zwischen einem Einlass, in den salzhaltiges Kraftstofföl zugeführt wird, und einem Auslass, aus dem die Emulsion zum Abscheider geleitet wird, umfasst, und wobei das salzhaltige Kraftstofföl, das dem Einlass zugeführt wird, zum Wirbeln nach dem Eintreten in den Einlass gebracht wird, ein feiner Wasserstrahl in das wirbelnde salzhaltige Kraftstofföl eingespritzt wird, wodurch die Emulsion gebildet wird und eine turbulente Strömung in der Emulsion, die in dem Abschnitt des Rohrs gebildet wird, geleitet wird.

2. Verfahren nach Anspruch 1, ferner **dadurch gekennzeichnet, dass** der Wirbel durch einen Propeller erzeugt wird, der nicht rotiert.

3. Verfahren nach Anspruch 1, ferner **dadurch gekennzeichnet, dass** die turbulente Strömung durch Mischstifte (38) im Abschnitt des Rohrs erzeugt wird.

4. Verfahren nach Anspruch 1, wobei der Abschnitt (32) des Rohrs ein Durchgangsabschnitt ist.

5. Verfahren nach Anspruch 4, wobei das Entsalzungsverfahren wiederholt ausgeführt wird, bevor das entsalzene Kraftstofföl dem Gasturbinenmotor zugeführt wird.

6. Vorrichtung (10) zum Entsalzen von Kraftstofföl, indem eine Wasser-Kraftstofföl-Emulsion gebildet wird und die angepasst ist, an einen Abscheider (24) geleitet zu werden, der Kraftstofföl von dem Wasser in der Emulsion trennt, **dadurch gekennzeichnet, dass** die Vorrichtung einen statischen Emulgator (22) umfasst, der einen Abschnitt (32) eines Rohrs mit einer vorbestimmten Länge zwischen einem Einlass davon zum Empfangen von salzhaltigem Kraftstofföl und einem Auslass davon, aus dem die Emulsion an den Abscheider geleitet werden kann, umfasst, wobei der Abschnitt des Rohrs nacheinander zwischen dem Einlass und dem Auslass einen Teil zum Erzeugen einer Verwirbelung von salzhaltigem Kraftstofföl, das mit dem Einlass aufgenommen wurde, einen Teil zum Einspritzen eines feinen Wasserstrahls in das wirbelnde salzhaltige Kraftstofföl und einen Teil zum Erzeugen einer turbulenten Strömung der Emulsion, die von dem Abschnitt des Rohrs geleitet wird, umfasst.

7. Vorrichtung nach Anspruch 6, ferner **dadurch gekennzeichnet, dass** der Verwirbelungsteil durch einen statischen Propeller (34) gebildet ist.

8. Vorrichtung nach Anspruch 6, ferner **dadurch gekennzeichnet, dass** der turbulente Strömungsleitungsteil durch eine Gruppe von Mischstiften (38), die in unterschiedlichen Winkeln über den Abschnitt des Rohrs orientiert sind, gebildet ist.

9. Vorrichtung nach Anspruch 6, ferner **dadurch gekennzeichnet, dass** der Wassereinspritzteil mindestens eine Wassernebeldüse (36) umfasst.

10. Vorrichtung nach Anspruch 6, wobei der Abschnitt des Rohrs und des Abscheiders Komponenten eines Rohrleitungssystems zum Zuführen entsalzenen Kraftstoffs zu einer Gasturbine (12) sind.

## Revendications

1. Procédé de dessalement de carburant, dans lequel un carburant contenant du sel et de l'eau alimentent une section d'un tuyau d'une manière telle qu'une émulsion eau-carburant est créée dans cette section dudit tuyau de telle manière que l'eau extrait le sel du carburant contenant du sel, et l'émulsion est transférée vers un séparateur (24) qui sépare le carburant dessalé de l'eau contenant du sel dans l'émulsion, **caractérisé en ce que** l'émulsion est formée dans un émulseur statique (22) qui comprend ladite section (32) de tuyau entre un orifice d'entrée alimenté en carburant contenant du sel et un orifice de sortie à partir duquel l'émulsion est transférée vers le séparateur et dans lequel le carburant contenant du sel alimentant l'orifice d'entrée est amené à tourbillonner lors de son entrée dans l'orifice d'entrée, un fin jet d'eau est injecté dans le carburant tourbillonnant contenant du sel, moyennant quoi l'émulsion est formée et un écoulement turbulent est favorisé dans l'émulsion formée dans ladite section de tuyau.

2. Procédé selon la revendication 1, **caractérisé en outre en ce que** le tourbillon est créé par une hélice qui ne tourne pas.

3. Procédé selon la revendication 1, **caractérisé en outre en ce que** l'écoulement turbulent est favorisé par des broches mélangeuses (38) dans la section de tuyau.

4. Procédé selon la revendication 1, dans lequel la section (32) de tuyau est une section en ligne.

5. Procédé selon la revendication 4, dans lequel le procédé de dessalement est réalisé de manière répétitive avant d'alimenter le moteur à turbine à gaz en carburant dessalé.

6. Appareil (10) de dessalement de carburant, dans lequel une émulsion eau-carburant est formée et adaptée pour être transférée vers un séparateur (24) qui sépare le carburant de l'eau dans l'émulsion, **caractérisé en ce que** l'appareil inclut un émulseur statique (22) qui comprend une section (32) de tuyau de longueur prédéterminée entre un orifice d'entrée de celui-ci pour recevoir un carburant contenant du sel, et un orifice de sortie de celui-ci à partir duquel l'émulsion peut être transférée vers le séparateur, la section de tuyau ayant successivement entre l'orifice d'entrée et l'orifice de sortie, une partie pour provoquer le tourbillonnement du carburant contenant du sel reçu par l'orifice d'entrée, une partie pour injecter un fin jet d'eau dans le carburant tourbillonnant contenant du sel, et une partie pour favoriser l'écoulement turbulent de l'émulsion transférée à partir de la section de tuyau.

7. Appareil selon la revendication 6, **caractérisé en outre en ce que** la partie de tourbillonnement est constituée d'une hélice statique (34).

8. Appareil selon la revendication 6, **caractérisé en outre en ce que** la partie favorisant l'écoulement turbulent est constituée d'un groupe de broches mélangeuses (38) orientées selon différents angles sur toute la section de tuyau.

9. Appareil selon la revendication 6, **caractérisé en outre en ce que** la partie d'injection d'eau comprend au moins une buse de brumisation d'eau (36).

10. Appareil selon la revendication 6, dans lequel la section de tuyau et le séparateur sont des composants d'un système de tuyauterie pour l'alimentation en carburant dessalé d'une turbine à gaz (12).
